# EUROPEAN PATENT APPLICATION

(11) **EP 4 796 439 A1**
(43) Date of publication of application: **26.08.2026**
(21) Application number: 26154127.0
(22) Date of filing: 26.01.2026
(51) Int. Cl.: B64C 27/00, B06B 1/16, B64D 45/00

(54) **AIRCRAFT MONITORING AND CONTROL SYSTEM AND METHOD**

(30) Priority: 20.02.2025 US 202519058220
(71) Applicant: Honeywell International Inc., Charlotte, NC 28202 (US)
(72) Inventor: ANDERSON, Spencer, Charlotte, 28202 (US); HICKMAN, Alan, Charlotte, 28202 (US); JACKSON, Benjamin, Charlotte, 28202 (US); KOENIG, John, Charlotte, 28202 (US); PARK, Sean, Charlotte, 28202 (US); VALK, Caspar Leo Hendrik Geert, Charlotte, 28202 (US)
(74) Representative: Ingrassia, Fisher & Lorenz UK Ltd.

(57) **Abstract**

An aircraft monitoring and control system includes a plurality of actuator controllers and a plurality of accelerometer. Each actuator controller is configured to receive actuator position control commands from at least one flight control computer and to supply accelerometer data it receives to the at least one flight control computer. Each actuator controller is further configured, in response to the actuator position control commands, to generate and supply actuator commands. Each accelerometer is associated with a different one of the actuator controllers. Each accelerometer is configured to sense vibrations and supply the accelerometer data, indicative of the sensed vibrations, to its associated actuator controller.

## Description

### TECHNICAL FIELD

The present disclosure generally relates to aircraft systems and, more particularly, to an aircraft monitoring and control system and method.

### BACKGROUND

Aeroelastic instability, which may also be referred to as flutter, is caused by the interaction of the inertial, structural, and aerodynamic forces acting on the structures of an aircraft (e.g., wing, empennage). This can lead to oscillatory movement of these structures. The oscillatory movement of these structures in flutter can in turn lead to damage. This oscillatory movement, if not eliminated, could ultimately cause the aircraft structure to fail if not corrected.

Various techniques are available to manage or eliminate the aeroelastic instability. One technique is to include additional structural stiffness. However, this technique increases overall aircraft weight. Another technique is to use an active control system, referred to as an active flutter suppression (AFS) system, to manage the aeroelastic instability. Presently known AFS systems typically include a plurality of dedicated accelerometers. These accelerometers require electronic circuitry to process the sensor data, power supply to power the sensor, data bus to transmit the sensor data to the AFS control laws, etc. Although these known AFS systems are generally accurate, reliable, and robust, they do suffer certain drawbacks. For example, the weight, cost and installation effort associated with the accelerometers can be significant.

Hence, there is a need for a system and method that provides active flutter suppression and various other monitoring and control functions with relatively minimal cost and weight. The present disclosure addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an aircraft monitoring and control system includes at least one flight control computer, a plurality of actuator controllers, and a plurality of accelerometers. The at least one flight control computer is coupled to receive at least accelerometer data. The at least one flight control computer is configured to process at least the accelerometer data it receives and, in response, selectively supply actuator position control commands to one or more actuator controllers. The actuator controllers are in operable communication with the at least one flight control computer. Each actuator controller is configured to supply the accelerometer data to the at least one flight control computer, and each actuator controller is further configured, in response to the actuator position control commands it receives from the at least one flight control computer, to generate and supply actuator commands. Each accelerometer is associated with a different one of the actuator controllers. Each accelerometer is configured to sense vibrations and supply the accelerometer data, indicative of the sensed vibrations, to its associated actuator controller.

In another embodiment, an aircraft monitoring and control system includes a plurality of actuator controllers and a plurality of accelerometer. Each actuator controller is configured to receive actuator position control commands from at least one flight control computer and to supply accelerometer data it receives to the at least one flight control computer. Each actuator controller is further configured, in response to the actuator position control commands, to generate and supply actuator commands. Each accelerometer is associated with a different one of the actuator controllers. Each accelerometer is configured to sense vibrations and supply the accelerometer data, indicative of the sensed vibrations, to its associated actuator controller.

In yet another embodiment, a monitoring and control method for aircraft having a plurality of actuator controllers and a plurality of actuators, wherein each actuator is in operable communication with a different one of the actuator controllers, includes the steps of: disposing a plurality of accelerometers, one each, on, within, or separate from a different one of the actuator controllers; supplying accelerometer data from each accelerometer to its associated actuator controller, the accelerometer data indicative of sensed vibrations; supplying the accelerometer data from each actuator controller to at least one flight control computer; processing at least the accelerometer data in the at least one flight control computer to selectively supply actuator position control commands to one or more of the actuator controllers; and selectively generating and supplying actuator commands, from the one or more actuator controllers and in response to the actuator position control commands, to one or more of the actuators, to thereby cause the one or more actuators to move to a commanded position.

Furthermore, other desirable features and characteristics of the system and method will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 depicts a top-down schematic diagram of one embodiment of an aircraft;
FIG. 2 depicts a functional block diagram of a portion of one embodiment of monitoring and control system that may be included in the aircraft of FIG. 1;
FIG.3 depicts one example process, in flowchart form, that may be implemented in the system of FIG. 2 for suppressing flutter in an aircraft.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

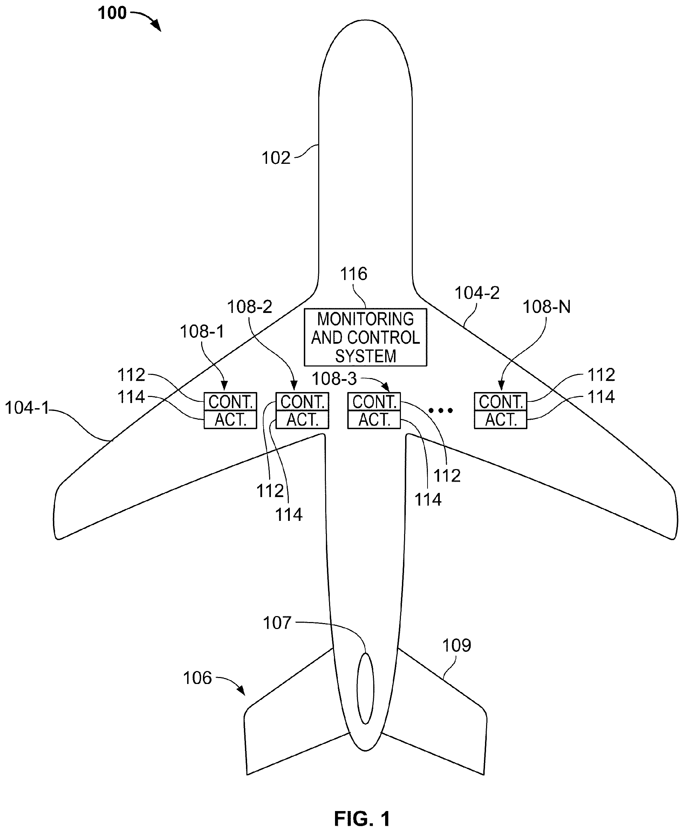

Referring first to FIG. 1, a top-down schematic diagram of one embodiment of an aircraft 100 is depicted. The aircraft 100 includes a fuselage 102, which has a plurality of wings 104 (104-1, 104-2) and an empennage 106 extending therefrom. As is generally known, the empennage 106 includes a vertical stabilizer 107 and a horizontal stabilizer 109.

The aircraft 100, as with many other aircraft, also includes a plurality of actuator control subsystems 108 (108-1, 108-2, 108-3, . . .108-N). Each actuator control subsystem 108 includes an actuator controller 112 and at least one associated actuator 114. In many instances, but certainly not all instances, various ones of the actuator control subsystems 108 may be associated with, and are configured to control the positions of, various non-illustrated flight control surfaces that are movably disposed on the wings 104 and empennage 106. In such instances, those actuator control subassemblies 108 are disposed in relatively close proximity to the flight control surfaces and are thus disposed at locations on the aircraft 100 where it is desirable to accurately define and measure the structural modes of the aircraft 100.

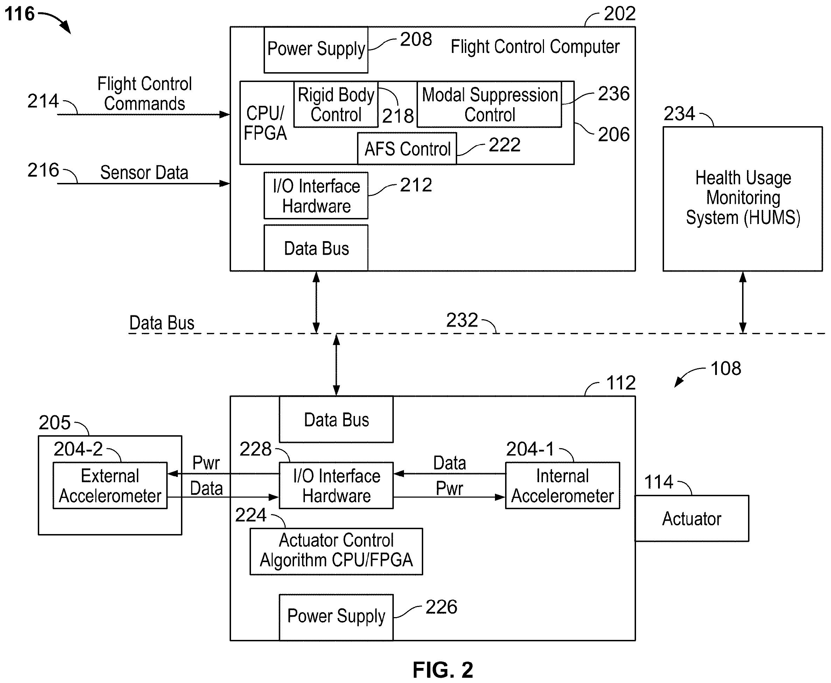

With the above in mind, and as FIG. 1 further depicts, the aircraft 100 additionally includes a monitoring and control system 116. The monitoring and control system 116 is configured to at least suppress flutter in the aircraft 100. A functional block diagram of a portion of the monitoring and control system 116 is depicted in FIG. 2, and with reference thereto will now be described.

The depicted monitoring and control system 116 includes one or more control processing systems 202 (for clarity, only one depicted), a plurality of the actuator control subsystems 108 (for clarity, only one is depicted), and a plurality of accelerometers 204 (for clarity, only two are depicted). Before proceeding further, it is noted that the one or more control processing systems 202 may be stand-alone processing systems or may form part of another aircraft avionic system. In the depicted embodiment, the one or more control processing systems 202 form part of an aircraft flight control system, and are thus configured as one or more flight control computers 202. In either case, and as FIG. 2 further depicts, each flight control computer 202 includes one or more flight control processors 206 and non-illustrated computer-readable storage devices or media encoded with programming instructions for configuring the flight control computers 202. Each flight control computer 202 additionally includes suitable and generally known, power supply hardware 208 and input/output interface hardware 212.

The one or more flight control processors 206 may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The non-illustrated computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

With the above in mind, and as FIG. 2 further depicts, each flight control computer 202 is coupled to receive flight control commands 214 from, for example, pilot control user interfaces, such as a sidesticks, pedals, a yoke, etc., and various sensor data 216 from various data sources such as, for example, inertial data sources, air data sources, radar altimeters, etc. Each flight control computer 202 is configured to process the flight control commands 214 and the sensor data 216, using any one of numerous known rigid body control algorithms 218, to generate and supply actuator position control commands to one or more of the actuator controllers 112, which in turn supply actuator commands to the associated actuators 114.

In addition to implementing the rigid body control 218, each flight control computer 202 is additionally configured to implement active flutter suppression. To do so, each flight control computer 202 is coupled to receive accelerometer data. Each flight control computer 202 is further configured to process the accelerometer data it receives and, in response, to selectively supply actuator position control commands to one or more of the actuator controllers 112, which in turn supply actuator commands to the associated actuators 114. It will be appreciated that the flight control computers 202 may implement this functionality using any one of numerous active flutter suppression control algorithms 222 that are presently known, or that are developed in the future, for actively suppressing flutter based on acceleration data.

The plurality of actuator controllers 112 are each in operable communication with one or more of the flight control computers 202. Each actuator controller 112 is configured to supply the accelerometer data to the one or more flight control computers 202. Additionally, each actuator controller 112 is configured, in response to the actuator position control commands it receives from the one or more flight control computers 202, to generate and supply actuator commands to its associated actuator 114. To do so, and as FIG. 2 further depicts, each actuator controller 112, at least in the depicted embodiment, includes one or more actuator control processors 224 and non-illustrated computer-readable storage devices or media encoded with programming instructions for configuring the actuator controller 112. Each actuator controller 112 additionally includes suitable, and generally known, power supply hardware 226 and input/output interface hardware 228.

The one or more actuator control processors 224 may be any custom-made or commercially available processor, a central processing unit (CPU), a graphics processing unit (GPU), an application specific integrated circuit (ASIC), a field programmable gate array (FPGA), an auxiliary processor among several processors associated with the controller, a semiconductor-based microprocessor (in the form of a microchip or chip set), any combination thereof, or generally any device for executing instructions.

The non-illustrated computer readable storage devices or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the controller.

It will be appreciated that each actuator 114 is in operable communication with its associated actuator controller 112 and is configured, in response to the actuator commands it receives, to move to a commanded actuator position. As may be appreciated, the commanded actuator position is designed to control the positions of non-illustrated flight control surface to which it is coupled, to thereby control the flight attitude and trajectory of the aircraft 100, as well as to actively suppress any flutter in the structure (e.g., wing 104) to which it is coupled.

As FIG. 2 further depicts, a data bus 232 is coupled between the one or more flight control computers 202 and a different one of the actuator controllers 112. The data bus 232, which facilitates the communication between the actuator controllers 112 and the one or more flight control computers 202, may be implemented using any one of numerous known data bus protocols. For example, the data bus 232 may be a CAN bus.

Each of the plurality of accelerometers 204 is associated with a different one of the actuator controllers 112. Each accelerometer 204 may be disposed on or within (or both) its associated actuator controller 112 (e.g., 204-1) or on a structure 205 separate from its associated actuator controller 112 (e.g., 204-2). In either case, each accelerometer 204 is configured to sense vibrations of the actuator controller 112 or the structure 205 and supply the accelerometer data, indicative of the sensed vibrations, to its associated actuator controller 112. As noted above, each actuator controller 112 supplies the accelerometer data it receives to one or more of the flight control computers 202. As FIG. 2 also depicts, each accelerometer 204 is electrically energized via its associated actuator controller 112. It will be appreciated that the accelerometers 204 may be implemented using any one of numerous known types of accelerometers that are presently known or that are developed in the futures, and that the accelerometers 204 may sense vibrations in one or more axes.

Regardless of the type of accelerometer 204 that is used, in some embodiments the monitoring and control system 116 additionally includes a health and usage monitoring processing system 234. The health usage and monitoring processing system 234, when included, is in operable communication with each actuator controller 112 and is coupled to receive the acceleration data from each of the actuator controllers 112. The health usage and monitoring processing system 234 is configured, in response to the acceleration data, to monitor at least a health state of each actuator 114. To do so, the health usage and monitoring processing system 234 may implement any one of numerous known algorithms for monitoring system and component health. In some embodiments, the health and usage monitoring processing system 208 is additionally configured to store data representative of the health state of each actuator 114. These data can then be retrieved and used by personnel, such as technicians, to determine if maintenance is needed or required.

In addition to eliminating flutter in the aircraft 100, the monitoring and control system 116 may also, at least in some embodiments, be configured to implement the functionality of an active vibration control system. This added functionality, when included, reduces vibrations in the aircraft structure and cabin, thereby improving passenger comfort and further reducing the likelihood of structural instabilities. To implement this additional functionality, the one or more flight control computers 202 are configured, via any one of numerous known algorithms, to process the acceleration data and, in response, to selectively supply actuator position control commands to one or more of the actuator controllers 112 to cause the associated actuators 114 to move to positions that introduce noise and vibration that is opposite to the noise and vibration generated by various vibration sources such as, for example, the aircraft engines.

It will be appreciated that in some embodiments the monitoring and control system 116 may also be configured to implement yet another function. More specifically, this additional function is to mitigate modal oscillations of the aircraft 100. These modal oscillations, as is generally known, typically stem from the empennage 106, and more specifically the vertical stabilizer 107. Thus, to implement this functionality the one or more flight control computers 202 are further configured, in response to the acceleration data, to mitigate modal oscillations of the aircraft 100. To do so, at least in some embodiments, the one or more flight control computers 202 are each configured to implement any one of numerous known modal suppression control algorithms 236.

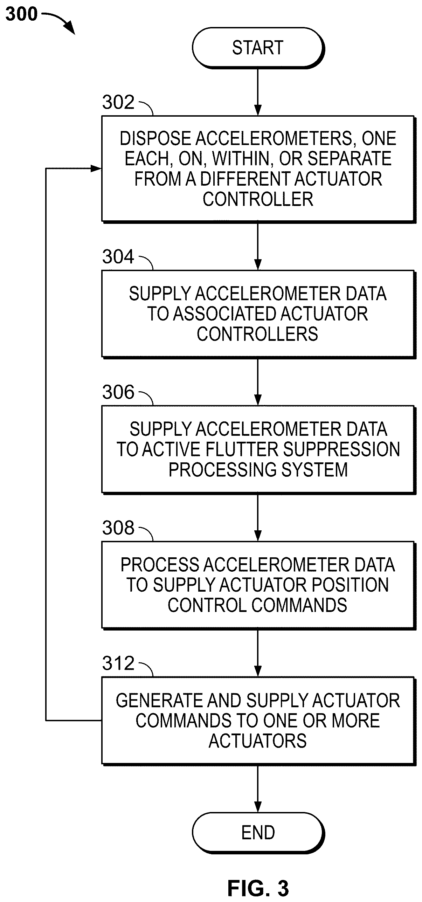

Referring now to FIG. 3, a process flowchart is depicted of one example process 300 for suppressing flutter in an aircraft. The order of operation within the process 300 is not limited to the sequential execution as illustrated in the figure but may be performed in one or more varying orders as applicable and in accordance with the present disclosure. Moreover, as will be explained further below, some of the depicted steps may not be performed at all.

The process 300 begins by disposing the plurality of accelerometers 204, one each, on, within, or separate from a different one of the actuator controllers 112 (302). Accelerometer data, which is indicative of vibrations sensed by each accelerometer 204 is supplied to its associated actuator controller 112 (304). The accelerometer data is then supplied from each actuator controller 112 to one or more flight control computers 202 (306).

In the flight control computers 202, the accelerometer data is processed to selectively supply actuator position control commands to one or more of the actuator controllers 112 (308). The actuator controllers 112 in turn selectively generate and supply actuator commands, in response to the actuator position control commands, to one or more of the actuators 114, to thereby cause the one or more actuators to move to a commanded position (312).

The system and method described herein provides active flutter suppression with relatively minimal cost and weight.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, softwareimplemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An aircraft monitoring and control system, comprising:
at least one flight control computer coupled to receive at least accelerometer data, the at least one flight control computer configured to process at least the accelerometer data it receives and, in response, selectively supply actuator position control commands to one or more actuator controllers;
a plurality of actuator controllers in operable communication with the at least one flight control computer, each actuator controller configured to supply the accelerometer data to the at least one flight control computer, each actuator controller further configured, in response to the actuator position control commands it receives from the at least one flight control computer, to generate and supply actuator commands;
a plurality of accelerometers, each accelerometer associated with a different one of the actuator controllers, each accelerometer configured to sense vibrations and supply the accelerometer data, indicative of the sensed vibrations, to its associated actuator controller.

2. The system of claim 1, further comprising:
a plurality of actuators, each actuator in operable communication with a different one of the actuator controllers and configured, in response to the actuator commands it receives, to move to a commanded actuator position.

3. The system of claim 2, further comprising:
a health and usage monitoring processing system in operable communication with each actuator controller, the health and usage monitoring processing system coupled to receive the acceleration data from the actuator controllers and configured, in response thereto, to monitor at least a health state of each actuator.

4. The system of claim 3, wherein the health and usage monitoring processing system is further configured to store data representative of the health state of each actuator.

5. The system of claim 1, wherein each accelerometer is electrically energized via its associated actuator controller.

6. The system of claim 1, wherein the at least one flight control computer is configured to implement active flutter suppression control and modal suppression control.

7. The system of claim 1, further comprising:
at least one data bus coupled between the at least one flight control computer and the actuator controllers.

8. A monitoring and control method for aircraft having a plurality of actuator controllers and a plurality of actuators, wherein each actuator is in operable communication with a different one of the actuator controllers, the method comprising the steps of:
disposing a plurality of accelerometers, one each, on, within, or separate from a different one of the actuator controllers;
supplying accelerometer data from each accelerometer to its associated actuator controller, the accelerometer data indicative of sensed vibrations;
supplying the accelerometer data from each actuator controller to at least one flight control computer;
processing at least the accelerometer data in the at least one flight control computer to selectively supply actuator position control commands to one or more of the actuator controllers; and
selectively generating and supplying actuator commands, from the one or more actuator controllers and in response to the actuator position control commands, to one or more of the actuators, to thereby cause the one or more actuators to move to a commanded position.

9. The method of claim 8, further comprising:
supplying the acceleration data from the actuator controllers to a health and usage monitoring processing system; and
processing the acceleration data in the health and usage monitoring processing system to monitor at least a health state of each actuator.

10. The method of claim 9, further comprising:
storing data representative of the health state of each actuator in the health and usage monitoring processing system.

11. The method of claim 8, further comprising electrically energizing each accelerometer via its associated actuator controller.

12. The method of claim 8, further comprising:
coupling a data bus between the at least one flight control computer and the actuator controllers.
